# EUROPÄISCHE PATENTANMELDUNG

(11) **EP 1 538 471 A1**
(43) Veröffentlichungstag der Anmeldung: **08.06.2005**
(21) Anmeldenummer: 04028491.1
(22) Anmeldetag: 01.12.2004
(51) Int. Cl.: G02B 21/18, G02B 21/36, G02B 21/24, G02B 7/16

(54) **Wechselvorrichtung für optische Elemente**

(30) Priorität: 02.12.2003 DE 10356154
(71) Anmelder: Leica Microsystems (Schweiz) AG, 9435 Heerbrugg (CH)
(72) Erfinder: Schnitzler, Harald, 9450 Lüchingen (CH); Zimmermann, Heinz, 9436 Balgach (CH)
(74) Vertreter: Hössle Kudlek & Partner

(57) **Zusammenfassung**

Es wird eine Wechselvorrichtung für optische Elemente (2a - 2d) in Stereomikroskopen vorgeschlagen, mit der ein Paar optischer Elemente (2) in die beiden Stereokanäle (3) eines Stereomikroskops einbringbar ist. Eine besonders kompakte Bauweise lässt sich dadurch erzielen, dass die optischen Elemente (2) kreisbogenförmig, insbesondere kreisringförmig nebeneinander angeordnet sind, wobei zwischen den Elementen eines den beiden Stereokanälen (3) zugeordneten Elementenpaares (2a, 2d) mindestens ein weiteres optisches Element (2e; 2b, 2c) angeordnet ist, und dass das Zentrum (4) der kreisbogen- bzw. kreisringförmigen Anordnung (1) zur Mitte (5) der Stereobasis der Stereokanäle (3) lateral verschoben ist.

## Beschreibung

Die Erfindung betrifft eine Wechselvorrichtung für optische Elemente in Stereomikroskopen, mit der ein Paar optischer Elemente in die beiden Stereokanäle eines Stereomikroskops einbringbar ist.

Derartige Wechselvorrichtungen werden häufig dazu verwendet, verschiedene Arbeitspositionen bei einem Stereomikroskop zu realisieren, beispielsweise eine teilweise oder gänzliche Ein- und/oder Auskopplung eines der beiden Strahlengänge zur Dokumentation, zur Überlagerung oder zu Mess-, Regelungs- oder Überwachungszwecken. Weiterhin können geeignete Blenden und/oder Filter in einen oder beide Strahlengänge eingebracht werden.

Aus der DE 196 22 357 A1 ist eine solche Wechselvorrichtung zum Umschalten der Betriebsarten eines Mikroskoptubus zwischen den Stellungen Beobachtung, Aufzeichnung sowie gleichzeitiger Beobachtung und Aufzeichnung bekannt. Hierzu sind drei optische Elemente, nämlich ein vollständig reflektierendes erstes Element, ein teildurchlässiges zweites Element sowie ein Ausgleichselement zum Ausgleich der optischen Weglänge als drittes optisches Element vorgesehen. Das erste und das zweite Element sind auf separaten Führungsschlitten befestigt, die zueinander verschiebbar angeordnet sind. Je nach gewünschter Arbeitsposition werden die optischen Elemente in oder aus dem Strahlengang gefahren, indem sie linear entlang von Führungsstangen verschoben werden.

Derartige Schiebekonstruktionen gestalten sich bereits für einen einkanaligen Mikroskoptubus, wie er in der DE 196 22 357 A1 beschrieben ist, als mechanisch aufwändig und rufen in der Stereomikroskopie einen erheblichen Raumbedarf hervor, da für jede Arbeitsposition je zwei optische Elemente paarweise benötigt werden, was Form und Handhabung des Tubus ungünstig beeinflusst.

In der WO 99/13370 A1 ist ein Filterwechselrad für die Stereofluoreszenzmikroskopie beschrieben, bei dem eine Kreisscheibe in vier Segmente unterteilt ist, von denen jedes Segment nebeneinander angeordnete Filter trägt, die in die Strahlengänge des Stereomikroskops einbringbar sind. Beispielsweise sind in einem Segment drei Filter angeordnet, von denen zwei im Beobachtungsstrahlengang und eines im Beleuchtungsstrahlengang eingebracht werden können. Die die Filter tragenden Filterträger bilden ein Kreissegment und sind austauschbar. Der Mittelpunkt des Wechselrades liegt bei dieser Konstruktion weit außerhalb des Zentrums der Stereokanäle, wodurch ein erheblicher Platzbedarf entsteht.

Andere bekannte Wechselvorrichtungen in der Stereomikroskopie basieren derzeit auf Schiebemechanismen. Diese Vorrichtungen sind in der Anzahl der Arbeitsstellungen sehr begrenzt (meist zwei Stellungen) und besitzen dabei bereits einen erheblichen Raumbedarf.

Es sind auch Wechselvorrichtungen bekannt, bei denen vier oder acht Elemente nebeneinander kreisringförmig angeordnet sind, wobei das Drehzentrum der Anordnung in der Mitte zwischen den beiden Stereokanälen, also in der Mitte der Stereobasis, liegt. Hiermit wird zwar eine kompaktere Bauweise als bei den linearen Wechselvorrichtungen erzielt, jedoch ist die Anzahl der ursprünglichen Arbeitsstellungen dadurch begrenzt, dass pro Arbeitsstellung zwei Elemente auf einem Kreisring, dessen Durchmesser dem Abstand der Stereokanäle entspricht, angeordnet werden müssen.

Der wachsende Bedarf nach beispielsweise digitaler Dokumentation mittels Strahlauskopplung sowie nach Strahlauskopplung aus dem Mikroskop für Zusatzmodule macht flexiblere Wechselvorrichtungen in Stereomikroskopen notwendig. Bei einer kompakten Bauweise der Wechselvorrichtung soll eine große Anzahl verschiedener Arbeitspositionen möglich sein.

Erfindungsgemäß wird eine Wechselvorrichtung gemäß Anspruch 1 oder 2 vorgeschlagen. Vorteilhafte Ausgestaltungen ergeben sich aus den Unteransprüchen und der nachfolgenden Beschreibung.

Die erfindungsgemäße Wechselvorrichtung für optische Elemente in Stereomikroskopen, mit der ein Paar optischer Elemente in die beiden Stereokanäle eines Stereomikroskops einbringbar ist, weist kreisbogenförmig, insbesondere kreisringförmig nebeneinander angeordnete und um ein Zentrum drehbare optische Elemente auf, wobei zwischen den Elementen eines den beiden Stereokanälen zuzuordnenden Elementenpaares mindestens ein weiteres optisches Element angeordnet ist, und wobei das Zentrum der Anordnung zur Mitte der Stereobasis der Stereokanäle lateral verschoben ist. Die Wechselvorrichtung wird im Stereomikroskop durch Drehen um das Zentrum verstellt. Ein Anschlag kann dabei die Verdrehmöglichkeiten auf einen geeigneten Bereich beschränken.

Die erfindungsgemäße um ein Zentrum drehbare Anordnung optischer Elemente, bei der dieses Zentrum zur Mitte der Stereobasis lateral verschoben ist, erlaubt es, unter Beibehaltung einer kompakten Bauweise mehr Elemente als bisher auf nahezu gleichem Raum unterzubringen. Während bisher bei kreisring- bzw. kreisbogenförmigen Anordnungen für eine bestimmte Anzahl von Arbeitspositionen die doppelte Anzahl optischer Elemente notwendig war, ergibt sich bei der erfindungsgemäßen Wechselvorrichtung die vorteilhafte Möglichkeit, ein optisches Element mit mehr als einem weiteren optischen Element zu entsprechend mehr als einem Elementenpaar zu kombinieren. So können beispielsweise mit drei optischen Elementen mindestens zwei verschiedene Elementenpaare, d.h. mindestens zwei verschiedene Arbeitspositionen, gebildet werden, wofür bisher vier oder mehr Elemente erforderlich waren.

Bei dieser Anordnung können die optischen Elemente raumsparend nahe der Mitte der Stereobasis, die die Stereokanäle verbindet, angebracht werden. Es lassen sich mit auf einem Kreisbogen liegenden optischen Elementen verschiedene Arbeitspositionen einstellen, wobei bei jeder Arbeitsposition bei der erfindungsgemäßen Anordnung mindestens ein inaktives Element zwischen dem aktiven Elementenpaar angeordnet ist. Die Elemente des aktiven Elementenpaares besitzen einen Abstand zueinander, der dem Abstand der Stereokanäle entspricht. Bei vorgegebenem Abstand der Stereokanäle (= Breite der Stereobasis) ist der Raumbedarf bei der erfindungsgemäßen Anordnung geringer als bei einer bogenförmigen Anordnung der beiden Elementenpaare nebeneinander, da das Zentrum des Kreisbogens näher an der Mitte der Stereobasis (Zentrum der Stereokanäle) liegt.

Erfindungsgemäß ist das Zentrum der beispielsweise kreisringförmigen Anordnung zur Mitte der Stereobasis (Zentrum der Stereokanäle) lateral verschoben. Dies ermöglicht insbesondere eine ungerade Anzahl äquidistant angeordneter optischer Elemente auf einem Kreisring. Beispielsweise lassen sich bei fünf kreisringförmig angeordneten optischen Elementen maximal fünf verschiedene Elementenpaare bzw. Arbeitspositionen bilden, wobei zwischen jedem Elementenpaar auf der einen Seite des Kreisrings ein weiteres optisches Element und auf der anderen Seite zwei weitere optische Elemente angeordnet sind. Bei einer solchen Anordnung kann das Zentrum der Anordnung in der Nähe der Mitte der Stereobasis liegen, so dass eine kompakte Bauweise erzielt werden kann.

Die erfindungsgemäße Wechselvorrichtung für optische Elemente in Stereomikroskopen, mit der ein Paar optischer Elemente in die beiden Stereokanäle eines Stereomikroskops einbringbar ist, lässt sich alternativ dadurch charakterisieren, dass die optischen Elemente kreisbogenförmig, insbesondere kreisringförmig, nebeneinander angeordnet sind, wobei zumindest ein optisches Element jeweils mit einem anderen optischen Element der Wechselvorrichtung zu mehr als einem Elementenpaar zur Zuordnung zu den beiden Stereokanälen kombinierbar ist. Hierdurch lassen sich beim Einsatz der Wechselvorrichtung in einem Stereomikroskop dann zwei oder mehr Arbeitspositionen bilden, bei denen ein Element jeweils das selbe ist, mit dem andere Elemente zu einem Elementenpaar kombiniert werden. Eine solche Anordnung ist äußerst flexibel und gestattet, mit weniger Elementen als bisher eine bestimmte Anzahl von Arbeitspositionen zu realisieren.

Die optischen Elemente bei der erfindungsgemäßen Wechselvorrichtung können aus einer Gruppe gewählt werden, die Filter, wie Farb- und Graufilter, Blenden, Linsen (Bertrandlinsen), Strahlteiler, Spiegel und Leerstellen sowie weitere optisch voll-, teil- und undurchlässige Elemente umfasst. Volldurchlässige Elemente sind transparente Ausgleichselemente (z. B. aus Glas), die Unterschiede in den optischen Wegstrecken ausgleichen sollen, oder Leerstellen (ohne jegliche optische Wirkung). Undurchlässige Elemente können Spiegel sein, die den Lichtstrahl aus seiner ursprünglichen Richtung ablenken oder opake Elemente, die den Lichtstrahl absorbieren.

Die Erfindung und ihre Vorteile sollen im Folgenden exemplarisch anhand eines Ausführungsbeispiels beschrieben werden. Es handelt sich hierbei um eine spezielle Ausführungsform, die die Erfindung in ihrem Umfang nicht beschränken soll.
- Figur 1: zeigt eine erfindungsgemäße Wechselvorrichtung mit fünf optischen Elementen in kreisringförmiger Anordnung, wobei die Figuren 1a bis 1c drei verschiedene Arbeitspositionen in einem Stereomikroskop darstellen;
- Figur 2: zeigt ein Stereomikroskop mit einer erfindungsgemäßen Wechselvorrichtung für optische Elemente, wie sie beispielsweise in Figur 1 dargestellt ist.

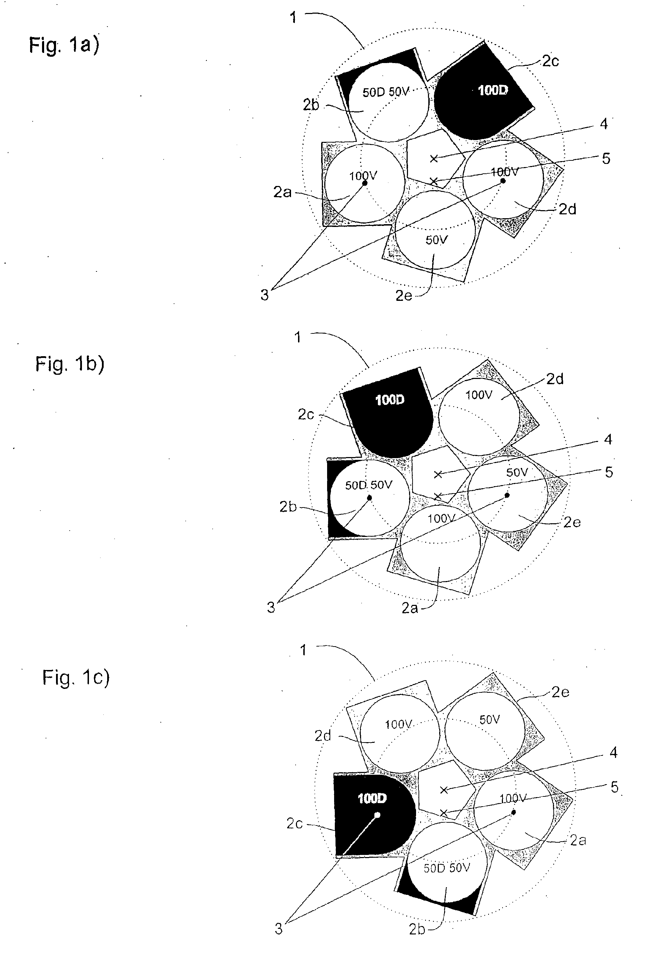

Figur 1 zeigt eine erfindungsgemäße Anordnung 1 in einer schematisch dargestellten Wechselvorrichtung für optische Elemente 2, die ringförmig angeordnet sind. Mit der dargestellten Vorrichtung können drei Arbeitspositionen in einem Stereomikroskop realisiert werden, wie sie in den Figuren 1a, 1b und 1c dargestellt sind. Die drei Arbeitspositionen lassen sich als "Stereo-Beobachtung", "50%-Stereo-Beobachtung und 50%-Dokumentation" und "100%-Dokumentation und einkanalige Beobachtung" beschreiben. Die Elemente 2a und 2d sind zylinderförmige Glasstücke (Ausgleichselemente), die nur die Aufgabe des optischen Weglängenausgleichs haben. Element 2b ist ein Strahlteiler (Teilungsverhältnis: 50/50). Element 2c ist ein Halbwürfelspiegel und Element 2e ist ein Graufilter mit einer Transmission von 50%. Das Zentrum der ringförmigen Anordnung 1 ist mit 4 bezeichnet. Die Mitte der Stereobasis oder das Zentrum der Stereokanäle 3 ist mit 5 bezeichnet.

Aufgrund der ungeradzahligen Anzahl von Elementen 2 und der äquidistanten ringförmigen Anordnung fällt die Mitte 5 der Stereobasis nicht mit dem Zentrum 4 der Anordnung 1 zusammen. Man erkennt jedoch, dass beide Punkte nahe beieinander liegen, so dass insgesamt eine sehr kompakte Bauweise erreicht wird. Die Stereokanäle 3 geben das Zentrum der Beobachtungsstrahlengänge in einem Stereomikroskop in der Querschnittsebene wieder, die in Figur 1 durch die Anordnung 1 definiert wird.

In der ersten Arbeitsposition "Stereo-Beobachtung" (Figur 1a) befinden sich die Elemente 2a und 2d in den beiden Stereokanälen 3 für eine Beobachtung mit 100% Lichttransmission. Die übrigen Elemente liegen zwischen diesem Elementenpaar und stellen in dieser Arbeitsposition inaktive optische Elemente dar.

In der zweiten Arbeitsposition "50%-Stereobeobachtung und 50%-Dokumentation" gemäß Figur 1b befinden sich die Elemente 2b und 2e in den Stereokanälen 3. Das Element 2b ist ein Strahlteiler, der 50% der Lichtintensität in Beobachtungsrichtung hindurch lässt und die anderen 50% zu Dokumentationszwecken auskoppelt. Das optische Element 2e ist ein Graufilter mit einem Transmissionsgrad von 50%, so dass auf beiden Stereokanälen 3 eine Beobachtung mit 50% Lichttransmission erfolgen kann.

Das Umschalten zwischen der ersten und der zweiten Arbeitsposition lässt sich durch eine Drehung entgegen dem Uhrzeigersinn um ein Element gegenüber der in Figur 1a dargestellten Position erzielen.

Die dritte Arbeitsposition "100%-Dokumentation und einkanalige Beobachtung" ist in Figur 1c dargestellt, wobei diese Arbeitsposition wiederum durch Drehung um ein Element entgegen dem Uhrzeigersinn aus der in Figur 1b gezeigten Position erzielt werden kann. Bei dieser Arbeitsposition liegen die Elemente 2c und 2a im Strahlengang der Stereokanäle 3. Element 2c stellt einen Halbwürfelspiegel dar, der den gesamten Strahlengang auskoppelt und somit beispielsweise zu Dokumentationszwecken zugänglich macht. Das optische Element 2a ist das bereits oben beschriebene zylinderförmige Glasstück, das 100% Lichttransmission aufweist. Das Element 2a garantiert somit eine einkanalige Beobachtung.

Wie an diesem Beispiel deutlich wird, können mit den genannten fünf Elementen 2 drei Arbeitspositionen in einem Stereomikroskop realisiert werden, wobei die die fünf Elemente tragende Wechselvorrichtung eine kompakte Bauweise aufweist. An diesem Beispiel wird auch deutlich, dass bei der erfindungsgemäßen Anordnung 1 ein Element (hier Element 2a) in zwei verschiedenen Arbeitspositionen (Fig. 1a und Fig. 1c) eingesetzt werden kann, was zusätzlich zu einer kompakten Bauweise beiträgt.

Da die den einzelnen Arbeitspositionen zugehörigen optischen Elemente nicht paarweise nebeneinander platziert sind, wird erreicht, dass das Zentrum 4 der Anordnung 1 nicht weit von der Mitte 5 der Stereobasis entfernt liegt, wodurch die Anordnung ohne großen lateralen Raumbedarf auf den Optikträger des Stereomikroskops aufgebracht werden kann.

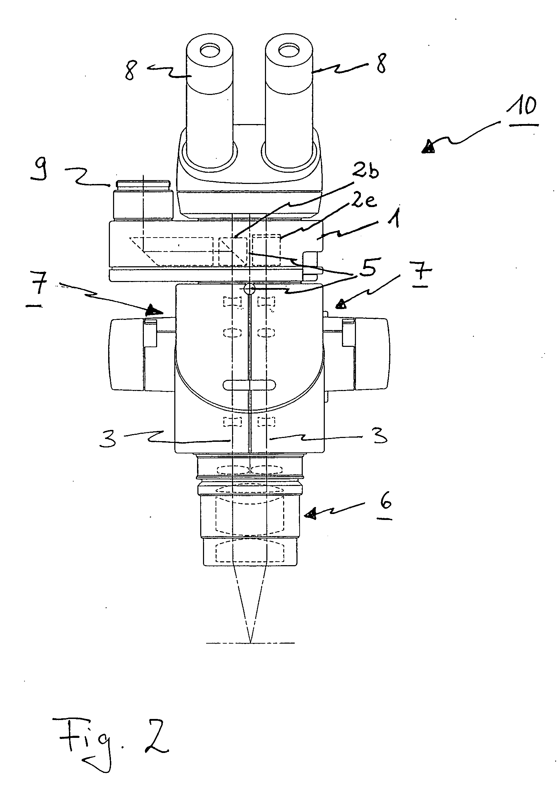

Figur 2 zeigt in schematischer Ansicht ein Stereomikroskop 10 mit einer Wechselvorrichtung 1 gemäß Figur 1. Das Objektiv des Stereomikroskops 10 ist mit 6 bezeichnet, die Zoomsysteme der beiden Stereokanäle 3 sind mit 7 bezeichnet. Die Mitte der Stereobasis oder das Zentrum der Stereokanäle 3 (oder besser deren optischer Achsen) ist mit 5 bezeichnet. Die Linsen des Objektivs 6 und der beiden Zoomsysteme 7 sind angedeutet. Die Okulare des Stereomikroskops 10 sind mit 8 bezeichnet.

Wie Figur 2 entnommen werden kann, lässt sich die Wechselvorrichtung 1 in sehr kompakter Weise in ein Stereomikroskop 10 einbringen. Die in Figur 2 dargestellte Arbeitsposition der Wechselvorrichtung 1 entspricht der zweiten Arbeitsposition, wie sie im Zusammenhang mit Figur 1b erörtert wurde. Diese Arbeitsposition, nämlich "50%-Stereobeobachtung und 50%-Dokumentation", ermöglicht das Auskoppeln von 50% eines der optischen Strahlen zu Dokumentationszwecken. Dies lässt sich durch das einen Strahlteiler darstellende optische Element 2b erreichen. Das optische Element 2e ist ein Graufilter mit einem Transmissionsgrad von 50%, so dass auf beiden Stereokanälen 3 eine Beobachtung mit 50% Lichttransmission erfolgen kann. Das sich ergebende Bild kann über die Okulare 8 betrachtet werden.

Der Teil des von einem der Stereokanäle ausgekoppelten optischen Strahls wird zu einem weiteren optischen Element geleitet, das den Strahl in den Ausgang 9 für Dokumentationszwecke umlenkt. Durch Drehen der Wechselvorrichtung um ein Element im Gegenuhrzeigersinn können die anderen im Zusammenhang mit Figur 1 besprochenen Arbeitspositionen eingestellt werden.

Ausgehend von der vorliegenden Erfindung kann der Fachmann die jeweils kompakteste Anordnung aufgrund der Anzahl und des Typs der benötigten optischen Elemente, deren Freidurchmesser und der Breite der Stereobasis für jede Wechselvorrichtung individuell bestimmen.

### Bezugszeichenliste

- 1: Anordnung der optischen Elemente
- 2, 2a-2e: optische Elemente
- 3: Stereokanal
- 4: Zentrum der Anordnung
- 5: Mitte der Stereobasis
- 6: Objektiv
- 7: Zoomsystem
- 8: Okular
- 9: Dokumentationsausgang
- 10: Stereomikroskop

## Patentansprüche

1. Wechselvorrichtung für optische Elemente (2) in Stereomikroskopen, mit der ein Paar optischer Elemente in die beiden Stereokanäle (3) eines Stereomikroskops einbringbar ist,
**dadurch gekennzeichnet,**
**dass** die optischen Elemente (2) um ein Zentrum drehbar, kreisbogenförmig, insbesondere kreisringförmig, nebeneinander angeordnet sind, wobei zwischen den Elementen eines den beiden Stereokanälen (3) zuzuordnenden Elementenpaares mindestens ein weiteres optisches Element angeordnet ist, und
**dass** das Zentrum (4) der kreisbogen- bzw. kreisringförmigen Anordnung (1) zur Mitte (5) der Stereobasis der Stereokanäle (3) lateral verschoben ist.

2. Wechselvorrichtung für optische Elemente (2) in Stereomikroskopen, mit der ein Paar optischer Elemente in die beiden Stereokanäle (3) eines Stereomikroskops einbringbar ist,
**dadurch gekennzeichnet,**
**dass** die optischen Elemente (2) kreisbogenförmig, insbesondere kreisringförmig, nebeneinander angeordnet sind, wobei ein optisches Element jeweils mit einem anderen optischen Element der Wechselvorrichtung zu mehr als einem Elementenpaar zur Zuordnung zu den beiden Stereokanälen (3) kombinierbar ist.

3. Wechselvorrichtung nach Anspruch 1 oder 2, **dadurch gekennzeichnet, dass** mehr als vier Elemente (2) vorgesehen sind.

4. Wechselvorrichtung nach Anspruch 1, **dadurch gekennzeichnet, dass** ein optisches Element jeweils mit einem anderen optischen Element der Wechselvorrichtung zu mehr als einem Elementenpaar zur Zuordnung zu den beiden Stereokanälen (3) kombinierbar ist.

5. Wechselvorrichtung nach einem der Ansprüche 1 bis 4, **dadurch gekennzeichnet, dass** die optischen Elemente (2) aus einer Gruppe gewählt sind, die Filter, Blenden, Linsen, Strahlteiler, Spiegel und Leerstellen sowie weitere optisch voll-, teil- und undurchlässige Elemente umfasst.

6. Wechselvorrichtung nach einem der Ansprüche 1 bis 5, **dadurch gekennzeichnet, dass** fünf optische Elemente (2a - 2e) derart angeordnet sind, dass unter Verwendung aller fünf optischen Elemente mindestens drei Elementenpaare für mindestens drei verschiedene Arbeitspositionen des Stereomikroskops gebildet werden können.

7. Stereomikroskop mit einer Wechselvorrichtung gemäß einem der vorstehenden Ansprüche.
